# EUROPEAN PATENT APPLICATION

(11) **EP 2 020 804 A1**
(43) Date of publication of application: **04.02.2009**
(21) Application number: 07445029.7
(22) Date of filing: 02.08.2007
(51) Int. Cl.: H04M 1/02

(54) **Slider mechanism with zigzag springs for opening and closing a portable terminal**

(71) Applicant: Laird Technologies MAP Co., Ltd, Dalseo-gu Daegu 704-801 (KR)
(72) Inventor: Kim, Tae Hyun, Bucheon-si, Gyeonggi-do 420-805 (KR); Hwang, Jae Man, Bucheon-si, Gyeonggi-do 420-805 (KR)
(74) Representative: Fritzon, Rolf

(57) **Abstract**

Disclosed herein is a slider mechanism for slidably opening and closing a portable communications terminal. The terminal includes a main body and a slider body sliding on the main body. The slider mechanism includes a first slider member fixed to one of the main body and slider body and a second slider member fixed to the other one. The second slider member is slidably engaged with the first slider member. A zigzag spring is disposed between the first and second slider members. One end of the zigzag spring is rotatably supported on one of the first and second slider members and the other end thereof is rotatably supported on the other one of the first and second slider members. The zigzag spring is formed of a first zigzag portion and a second zigzag portion having spring characteristics from the first zigzag portion.

## Description

### Field of the Invention

The present invention relates to a slider type portable terminal. More specifically, the invention relates to a slider mechanism for slidably opening and closing a portable terminal.

### Background of the invention

Recently, as portable wireless terminals have been increasingly popularized, users need additional functions to their tastes even in opening and closing operations of the terminal, along with its inherent functions of wireless communications.

In response to these needs, portable terminals have developed into a bar type, flip type, flip-up type, folder type, and the like. In recent years, the folder type has been used most widely. This is because the folder type terminal has a space enough to accommodate a wide LCD module as its display device and can be carried in a folded state to thereby provide a good portability, as compared with other types of terminals.

In more recent years, a slider type terminal has been introduced, which can be equipped with an LCD module display device having a similar size to the folder type. Simultaneously, the slider mechanism thereof can contribute to miniaturization of portable terminals.

This slider type terminal is structured such that a sub-body corresponding to a cover is slidably opened and closed on a main body, thereby providing additional advantages of slidably opening and closing, while maintaining the merits of the existing folder type terminal.

For example, Korean Utility Model Registration No. 0308165 discloses a slider-type portable wireless terminal. The terminal disclosed in the above application includes a guide means for guiding a slider body on a main body and at least one resilient means installed between the slider body and the main body such that its resilient force can be exerted in opening or closing direction with respect to a certain sliding point of the slider body. In addition, when the slider body is completely opened or closed, it can remain in its opened or closed state due to the resilient means, without any separate stopper. The resilient means employs a torsion spring, one end of which is fixed to the main body and the other end thereof is fixed to the slider body.

In this slider mechanism, the torsion spring must exert resiliency to the slider body over the whole range of traveling, and the torsion spring is to be compressed and restored repeatedly over a wide range of amplitude. Therefore, a torsion spring expandable over a wide length is used, but this torsion spring has a smaller resilient force. In order to compensate for the deficient resilient force, two torsion springs are employed.

However, the torsion spring is compressed and restored in a wide range and thus easily aged due to fatigue caused by the repeated operations. Consequently, the torsion spring comes to lose its normal function or leads to an earlier failure.

In addition, this type of slider mechanism needs at least two torsion springs and further each torsion spring requires at least two windings, for the purpose of desired opening and closing Operations. It should be noted here that the space between the main body and the slider body varies with the diameter of spring wire and the number of windings of the torsion spring. That is, as the wire diameter increases and/or the winding numbers increases, the spacing between the main body and the slider body is inevitably widened. For example, in case where the torsion spring has a wire diameter of 0.5 mm and two windings, the spacing between the main body and the slider body must be 1.0 mm at minimum. Consequently, the portable terminal becomes bulky and thus its portability becomes worse as much.

Furthermore, in case of this type of slider mechanism using a torsion spring, the elastic force varies with the angle of the torsion spring. Thus, it is not easy to control the sliding force formed between the main body and the slider body. That is, the portable terminal itself may receive impact and thus the service life thereof will be shortened if any separate impact absorber or the like is not provided.

### Summary of the Invention

The present invention has been made in order to solve at least part of the problems in the art. It is an object of the invention to provide a slider mechanism using a zigzag spring for slidably opening and closing a slider-type portable terminal, thereby enabling to minimize the thickness of the portable terminal while allowing for a smooth sliding operation.

In order to accomplish the above object, according to one aspect of the invention, there is provided a slider mechanism for slidably opening and closing an electronic device, which includes a first body and a second body capable of sliding on the first body. The slider mechanism comprises: a first slider member capable of being fixed to the first body; a second slider member capable of being fixed to the second body, the second slider member being slidably engaged with the first slider member; and a zigzag spring disposed between the first and second slider members, one end of the zigzag spring being rotatably supported on the first slider member and the other end thereof being rotatably supported on the second slider body, the zigzag spring being compressed and restored while the first and second slider members slide linearly against each other, wherein the zigzag spring includes a first zigzag portion and a second zigzag portion having spring characteristics different from the first zigzag portion.

In an embodiment, the zigzag spring includes a pair of zigzag springs disposed so as not to interfere with each other.

In an embodiment, the first zigzag portion has a spring coefficient different from that of the second zigzag portion.

In an embodiment, the first zigzag portion has a zigzag pitch different from that of the second zigzag portion.

In an embodiment, the zigzag spring has an 'M'-shape in general.

In an embodiment, the first zigzag portion has a cross-sectional shape different from that of the second zigzag portion.

In an embodiment, the zigzag spring has a circular, oval or rectangular cross-section.

In an embodiment, the electronic device includes a portable communications terminal.

In an embodiment, the first slider member is formed integrally with the first body of the electronic device, and the second slider member is formed integrally with the second body of the electronic device.

According to another aspect of the invention, there is provided a slider mechanism for slidably opening and closing an electronic device, the electronic device having a first body and a second body linear-slidably combined with the first body, the mechanism comprising: a zigzag spring disposed between the first and second bodies, one end of the zigzag spring being rotatably supported on the first body and the other end thereof being rotatably supported on the second body, the zigzag spring being compressed and restored while the first and second bodies slide linearly against each other, wherein the zigzag spring includes a first zigzag portion and a second zigzag portion having a different spring characteristic from the first zigzag portion.

In an embodiment, the zigzag spring includes a pair of zigzag springs disposed so as not to interfere with each other.

In an embodiment, the zigzag spring has an 'M'-shape in general.

In an embodiment, the first zigzag portion has a spring coefficient different from that of the second zigzag portion.

In an embodiment, the first zigzag portion has a zigzag pitch different from that of the second zigzag portion.

In an embodiment, the zigzag portion has a circular, oval or rectangular cross-section.

In an embodiment, the first zigzag portion has a cross-sectional shape different from that of the second zigzag portion.

In an embodiment, the electronic device includes a portable communications terminal.

According to a further aspect of the invention, there is provided a portable communications terminal having a main body and a slider body, the slider body being slidably opened and closed with respect to the main body. The portable communications terminal comprises: a first slider member fixed to the main body; a second slider member fixed to the slider body, the second slider member being linear-slidably engaged with the first slider member; and a zigzag spring disposed between the first and second slider members, one end of the zigzag spring being rotatably supported on the first slider member and the other end thereof being rotatably supported on second slider member, the zigzag spring being compressed and restored while the first and second slider members slide linearly against each other, wherein the zigzag spring includes a first zigzag portion and a second zigzag portion having spring characteristics from the first zigzag portion.

In an embodiment, the zigzag spring includes a pair of zigzag springs disposed so as not to interfere with each other.

In an embodiment, the first zigzag portion has a spring coefficient different from that of the second zigzag portion.

In an embodiment, the first zigzag portion has a zigzag pitch different from that of the second zigzag portion.

In an embodiment, the zigzag spring has an 'M'-shape in general.

In an embodiment, the zigzag spring has a circular, oval or rectangular cross-section.

In an embodiment, the first zigzag portion has a cross-sectional shape different from that of the second zigzag portion.

In an embodiment, the main body and the first slider member are formed integrally with each other, and the slider body and the second member are formed integrally with each other.

### Brief Description of the Drawings

Further objects and advantages of the invention can be more fully understood from the following detailed description taken in conjunction with the accompanying drawings in which:
Fig. 1 is an exploded perspective view showing a slider mechanism for opening and closing a portable terminal, according to an embodiment of the invention;
Figs. 2 to 4 illustrate a resilient member used in the slider mechanism of Fig. 1 when in the closed state, during the opening and in the open state respectively of the terminal;
Fig. 5 is a perspective view of the slider mechanism when the portable terminal is completely closed;
Fig. 6 is a front view of the slider mechanism of Fig. 5;
Fig. 7 is a rear view of the slider mechanism of Fig. 5;
Figs. 8 and 9 are left and right side views of the slider mechanism of Fig. 5;
Figs. 10 and 11 are top and bottom views of the slider mechanism of Fig. 5;
Fig. 12 is a perspective view of the slider mechanism when the portable terminal is completely opened;
Fig. 13 is a front view of the slider mechanism of Fig. 12;
Fig. 14 is a rear view of the slider mechanism of Fig. 12;
Figs. 15 and 16 are left and right side views of the slider mechanism of Fig. 12; and
Figs. 17 and 18 are top and bottom views of the slider mechanism of Fig. 12.

### Detailed Description of Exemplary Embodiments of the Invention

Hereafter, exemplary embodiments of the invention will be explained, with reference to the accompanying drawings.

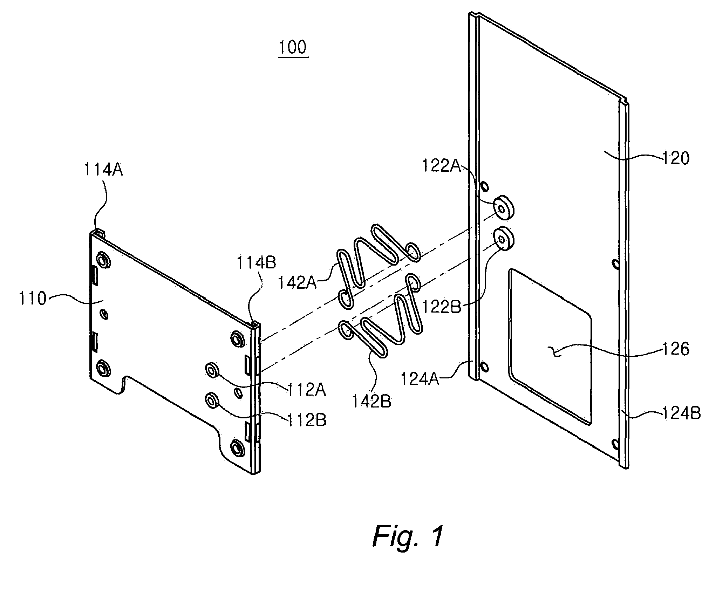

Fig. 1 is an exploded perspective view showing a slider mechanism for opening and closing a portable terminal, according to an embodiment of the invention, where the slider mechanism of this embodiment is denoted generally by reference numeral 100.

Referring to Fig. 1, the slider mechanism 100 includes a slider base 110 formed of for example a plastic material, a sliding plate 120 formed of for example a plastic material, and at least one resilient member 142A, 142B disposed in a space formed between the slider base 110 and the sliding plate 120. Although not illustrated, it should be understood to those skilled in the art that the slider base 110 and the sliding plate 120 are attached to a main body and a slider body of a portable terminal through various known techniques such as screw-fastening, snap-inserting, adhesive-bonding, welding and the like.

The terms "main body" and "slider body" used throughout the description and claims mean a stationary portion and a sliding portion of a portable terminal respectively when a user operates to open and close the terminal. In a typical slider-type portable terminal, a keypad is mounted on the face of the main body and a main board is housed inside of the main body to perform various functions. The slider body is equipped with a display screen. The main body and the slider body are electrically connected with each other through a flexible PCB.

It should be understood to those skilled in the art that the "slider base 110" may become an integral part of the main body of a terminal, or separately formed and fixed to the main body. In addition, the "sliding plate" may become an integral part of the slider body of the terminal, or separately formed and fixed to the slider body.

The slider mechanism 100 of this embodiment includes at least one resilient member for controlling the sliding operation of the sliding plate 120 against the slider base 110, for example, a first resilient member 142A (shown to the left side of the figure) and a second resilient member 142B (shown to the right of the figure).

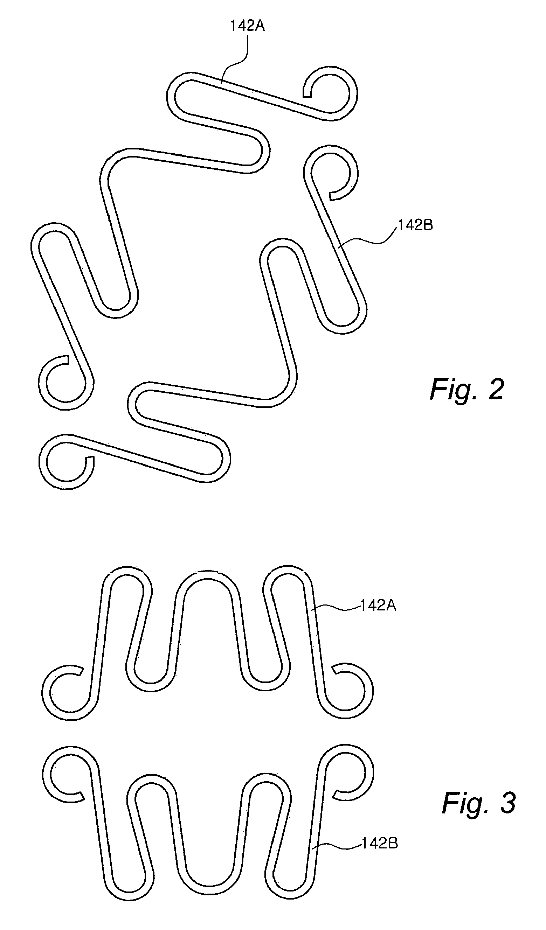

One end of the first resilient member 142A is supported on the slider base 110 and the other end thereof is supported on the sliding plate 120. Similarly, one end of the second resilient member 142B is supported on the slider base 110 and the other end thereof is supported on the sliding plate 120. For the purposes of a smooth sliding operation and minimization of the mechanism thickness, as illustrated in Figs. 2 to 4, the first and second resilient members 142A and 142B are disposed in such a manner that two resilient members are not overlapped during the sliding operation of the terminal.

As illustrated in Fig. 1, both ends of the first resilient member 142A are rotatably supported on the slider base 110 and the sliding plate 120 by means of rotational supports 112A and 122A, and both ends of the second resilient member 142B are rotatably supported on the slider base 110 and the sliding plate 120 by means of rotational supports 112B and 122B. In this embodiment, the rotational supports 112A, 122A, 112B and 122B employ a rivet having a groove formed around the rivet, where the ends of the resilient members are rotatably wrapped and supported. Furthermore, the rivet has a height substantially equal to or less than the sectional thickness of the respective resilient members in order to minimize the whole thickness of portable terminals.

In this embodiment, two resilient members are illustrated, but a single resilient member may be employed to provide for operations and effects corresponding to the illustrated two resilient members.

In particular, as shown in Figs. 2 to 4, the respective first and second resilient members 142A and 142B is in general formed of a zigzag spring having a first zigzag portion at the center and second zigzag portions at both sides thereof, which are designed to have different stress distributions and to be placed on the same plane. That is, the first and second zigzag portions are designed to have different spring characteristics such as different bending angles, different spring coefficients, different pitches of zigzags, or the like. More specifically, the first zigzag portion is made to have larger pitches than the second zigzag portion. In the embodiments illustrated in the figures, therefore the zigzag spring is formed to have approximately an M-shape, but not limited thereto. As previously mentioned, the first and second zigzag springs 142A and 142B are installed so as not to be overlapped with each other during the sliding operations of the mechanism. Thus, during the sliding operation, the respective first and second zigzag portions have different magnitudes and distributions of stress, and thus play different roles in allowing for smooth sliding of the mechanism and in being held in place at the open and closed states before or after the sliding operation. In addition, due to the zigzag spring itself and non-overlapped installation thereof, the slider mechanism, i.e., the portable terminals using this mechanism can minimize its thickness, thus enabling a slim model.

In the illustrated examples, the first zigzag portion is placed in the center between two second zigzag portions, but not limited thereto. The first and second zigzag portions may be placed in various different combinations, depending upon the applications thereof. For example, the zigzag spring may be formed of a single first zigzag portion and a single second zigzag portion.

Furthermore, the first and second zigzag springs 142A and 142B may be a circular, oval or rectangular cross-section, or other polygonal cross-sections. That is, the cross-section of the spring can be selected in various other ways to provide for various different resiliencies, i.e., to generate different elastic forces. For example, an oval cross-section can be applied to reduce the thickness of the slider mechanism while having the substantially same operational effects as in the circular cross-section illustrated in this embodiment.

As previously mentioned, the first and second zigzag portions in the zigzag spring have different spring characteristics. In order to provide for different spring characteristics, the first zigzag portion may have a different type of cross-section from that of the second zigzag portion. For example, the first zigzag portion may have a rectangular or oval cross-section and the second zigzag portion may have a circular cross-section.

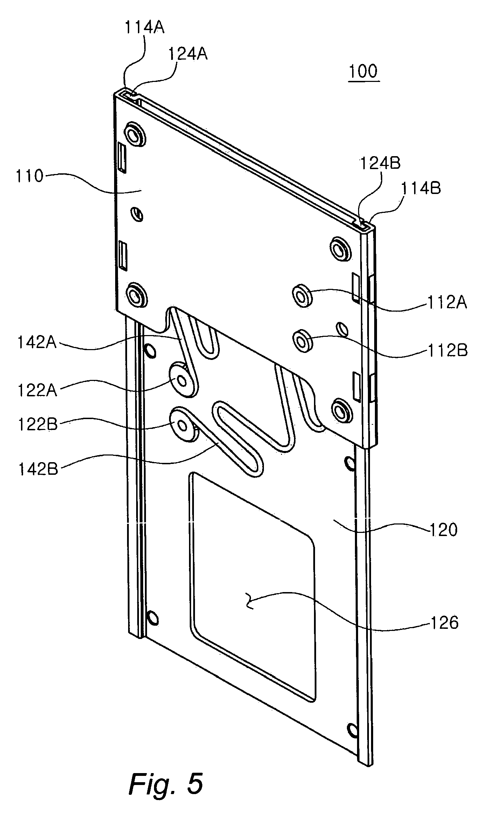

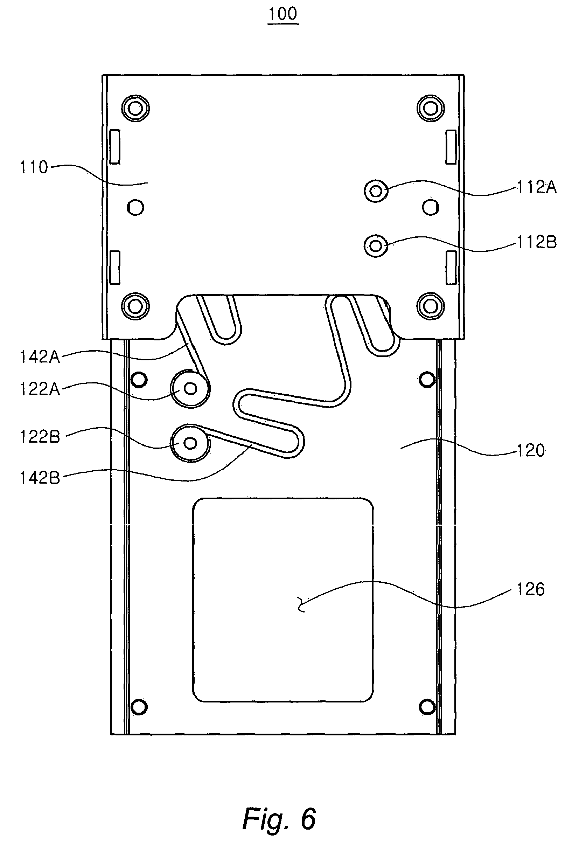

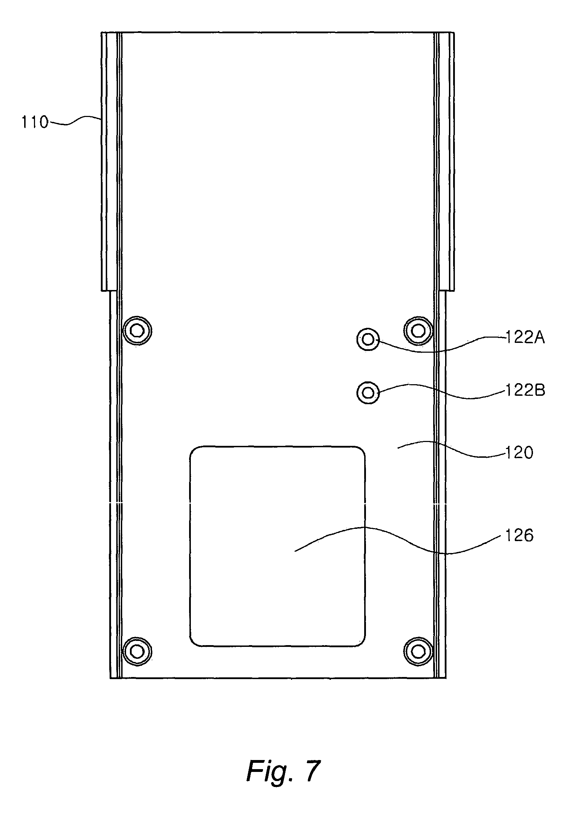

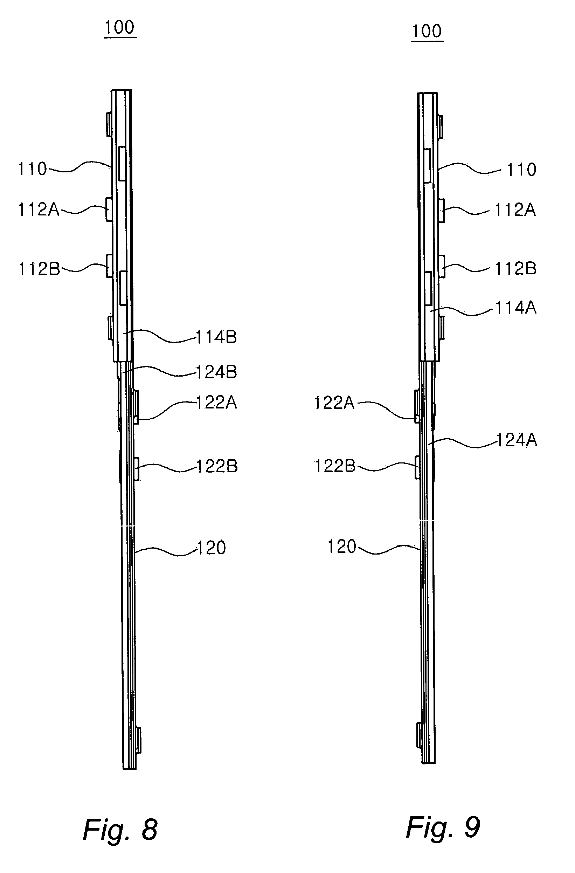

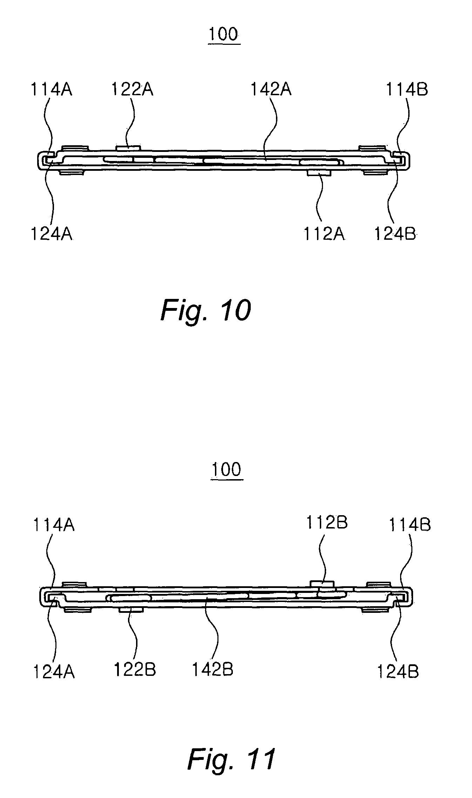

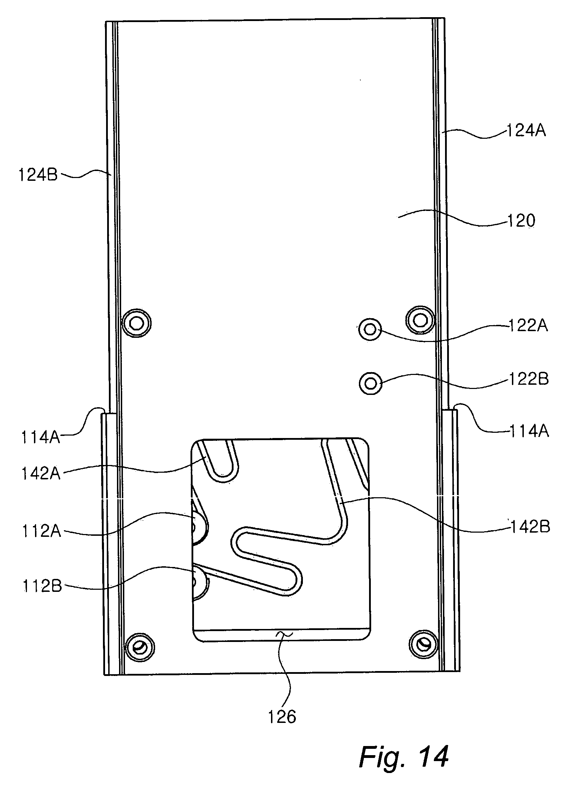

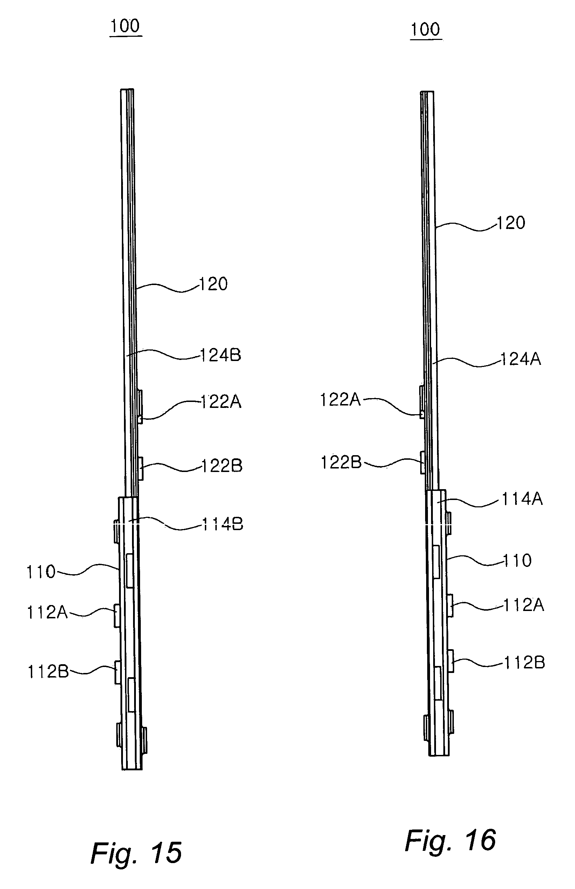

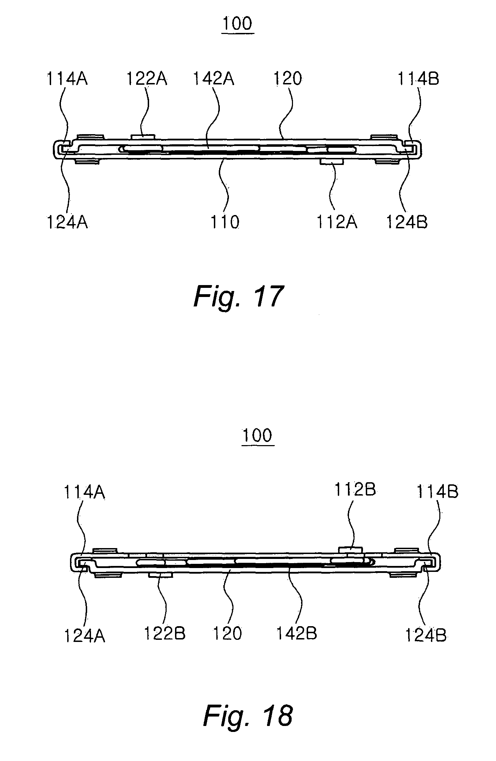

Referring to Figs. 5 to 18, for the purpose of smooth-sliding between the slider base 110 and the sliding plate 120, the slider base 110 is provided with a female guide 114A, 114B formed along the sliding direction in both lateral sides of the slider base. The sliding plate 120 is provided with a male guide 124A, 124B formed along the sliding direction in both lateral sides of the sliding plate. The female guide and male guide are slidably engaged with each other so as not to be released or escaped from each other. Of course, the female guide and the male guide may be switched to each other, and may be implemented in various other ways as long as they can slide on each other without escaping from each other. For example, the slider base 110 may be provide with a male guide of rail form and the sliding plate 120 may be provided with a female guide to be engaged with the male guide of rail form. As another alternative, a bar-type sliding guide member is provided in either the slider base 110 or the sliding plate 120, and a guide ring or hole is formed in the other one so as to be slidably inserted into the bar-type guide member.

Further, the inner side of the female guide 114A, 114B and the outer side of the male guide 124A, 124B may be reinforced with a plastic material, or the male and female guide themselves may be formed of a plastic material, thereby providing a further improvement in the durability of the slider mechanism 100. As a consequence, the service life of a portable terminal employing this slider mechanism can be further extended.

Figs. 2 to 4 illustrate a resilient member used in the slider mechanism of Fig. 1 in sequence when in the closed state, during the opening and in the open state respectively of the terminal.

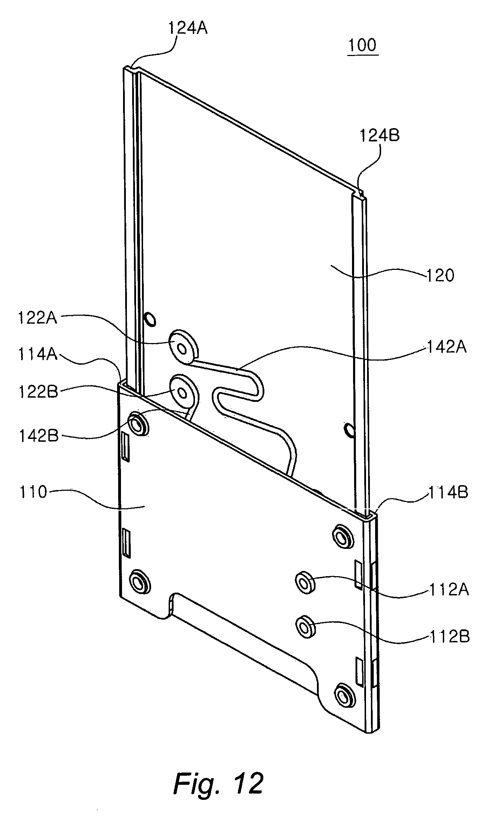

Referring to Figs. 2 to 4, when the portable terminal is completely closed, i.e., the slider mechanism 100 remains in its initial state, the respective zigzag springs 142A and 142B remain in its original state, as shown in Fig. 2. If a user tries to open the terminal, i.e., the slider base 110 slides down on the sliding plate 120 (in Fig. 5), the zigzag spring starts to be compressed. At this time, first the second zigzag portions at both sides are compressed and then the central first zigzag portion ("M-shaped portion" in this embodiment) is compressed. As the slider base 110 further slides down, the zigzag spring reaches a transition point where the opening and closing forces are balanced, as shown in Fig. 3. In other words, even slightly beyond the transition point, the slider base 110 can automatically slide down and reach the position of Fig. 12 by means of the resiliency of the zigzag spring 142A, 142B. That is, the portable terminal can be automatically and completely opened or closed, without exerting any further force by the user after the transition point.

At the time when the slider base 110 goes slightly beyond the transition point of Fig. 3, the zigzag spring 142A, 142B becomes strongly restored to its original state mainly by means of the central first zigzag portion, i.e. the M-shaped portion, such that the slider base 110 and the sliding plate 120 can be moved away from each other. That is, the slider base 110 reaches the position of Fig. 12. In other words, the sliding operation can be rapidly completed after the transition point of Fig. 3.

Figs. 5 to 11 show the slider mechanism when the portable terminal is completely closed, i.e., a perspective view, front view, rear view, left side view, right side view, top view and bottom view in sequence. When the portable terminal is closed, the resilient member, i.e., the zigzag spring remains in the state of Fig. 2 as previously explained and thus details thereon will not be repeated here.

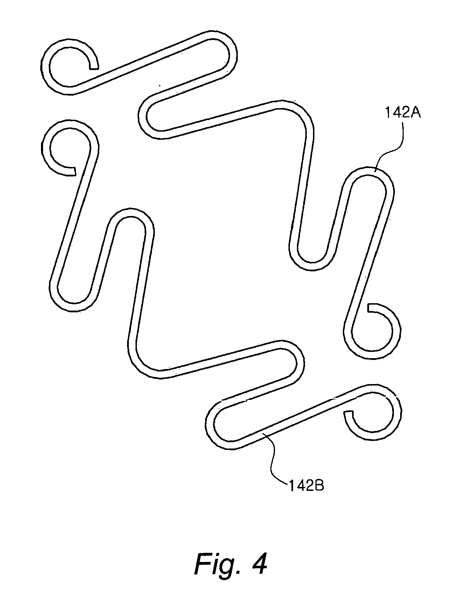

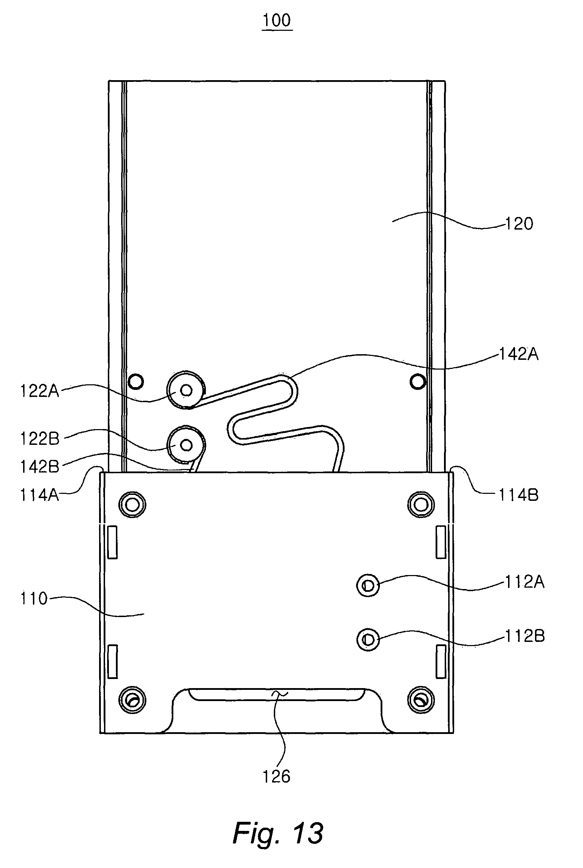

Figs. 13 to 18 show the slider mechanism when the portable terminal is completely opened, i.e., a perspective view, front view, rear view, left side view, right side view, top view and bottom view in sequence. When the portable terminal is opened, the resilient member, i.e., the zigzag spring remains in the state of Fig. 4 as previously explained and thus details thereon will not be repeated here.

As described above, the slider mechanism of the invention employs a zigzag spring to enable a slim portable terminal. Further, the zigzag spring is formed of portions having different stress distributions and elastic characteristics, thereby allowing for a more effective and smoother sliding operation and thus extending the service life of portable terminals using the slider mechanism of the invention.

Although the present invention has been described with reference to several exemplary embodiments, the description is illustrative of the invention and is not to be construed as limiting the invention. Various modifications and variations may occur to those skilled in the art, without departing from the spirit and scope of the invention, as defined by the appended claims.

## Claims

1. A slider mechanism for slidably opening and closing an electronic device having a first body and a second body capable of sliding on the first body, the slider mechanism comprising:
a first slider member capable of being fixed to the first body;
a second slider member capable of being fixed to the second body, the second slider member being slidably engaged with the first slider member; and
a zigzag spring disposed between the first and second slider members, one end portion of the zigzag spring being rotatably supported on the first slider member and the other end portion of the zigzag spring being rotatably supported on the second slider body, the zigzag spring being compressed and restored while at least one of the first and second slider members slides linearly relative to the other one of said first and second slide members,
wherein the zigzag spring includes a first zigzag portion and a second zigzag portion having spring characteristics different from the first zigzag portion.

2. The slider mechanism as claimed in claim 1, wherein the zigzag spring includes a pair of zigzag springs disposed so as not to interfere with each other.

3. The slider mechanism as claimed in claim 1, wherein the first zigzag portion has a spring coefficient different from that of the second zigzag portion.

4. The slider mechanism as claimed in claim 1, wherein the first zigzag portion has a zigzag pitch different from that of the second zigzag portion.

5. The slider mechanism as claimed in claim 1, wherein the zigzag spring has an 'M'-shape in general.

6. The slider mechanism as claimed in claim 1, wherein the first zigzag portion has a cross-sectional shape different from that of the second zigzag portion.

7. The slider mechanism as claimed in claim 1, wherein the zigzag spring has a circular, oval or rectangular cross-section.

8. A portable communications terminal comprising the slider mechanism as claimed in claim 1.

9. The slider mechanism as claimed in claim 1, wherein the first slider member is formed integrally with the first body of the electronic device.

10. The slider mechanism as claimed in claim 1, wherein the second slider member is formed integrally with the second body of the electronic device.

11. The slider mechanism as claimed in claim 1, wherein the zigzag spring includes first zigzag portion disposed generally between two second zigzag portions.

12. The slider mechanism as claimed in claim 11, wherein the first zigzag portion is about a center of the zigzag spring with second zigzag portions at both sides thereof.

13. The slider mechanism as claimed in claim 11, wherein the first zigzag portion has larger pitches than the second zigzag portions.

14. The slider mechanism as claimed in claim 11, wherein the first and second zigzag portions cooperatively define an M-shape in general.

15. The slider mechanism as claimed in claim 11, wherein the first and second zigzag portions define a plurality of curved portions alternating in curvature and extending generally between the one end portion of the zigzag spring rotatably supported on the first slider member and the other end portion of the zigzag spring rotatably supported on the second slider body.
